# FASCICULE DE BREVET EUROPEEN

(11) **EP 1 052 198 B1**
(45) Date de publication et mention de la délivrance du brevet: **31.03.2004**
(21) Numéro de dépôt: 99490014.0
(22) Date de dépôt: 03.05.1999
(51) Int. Cl.: B65G 17/20, B65G 9/00

(54) **Convoyeur utilisé dans l'industrie pour acheminer des pièces en nombre important**
Förderer für die Industrie zum Fördern von Bauteilen in grossen Mengen
Industrial conveyor for conveying parts in high numbers

(43) Date de publication de la demande: 15.11.2000
(73) Titulaire: Cersa NV (Société Anonyme), 7700 Mouscron (BE)
(72) Inventeur: Vanmeenen, Freddy, 7700 Mouscron (BE)
(74) Mandataire: Lepage, Jean-Pierre

(56) Documents cités:
- EP-A- 0 567 295
- FR-A- 2 608 501

## Description

L'invention est relative à un convoyeur utilisé en particulier dans l'industrie automobile pour convoyer, acheminer les carrosseries de voitures, les moteurs ou les boîtes de vitesses sur les postes de travail en vue de leur fabrication ou de l'assemblage des différentes pièces des voitures. Elle trouvera également son application dans tout type d'industrie où il est nécessaire de convoyer des pièces en nombre important.

Il est connu de longue date d'utiliser des convoyeurs pour transporter sur de très grandes distances des pièces automobiles dont le nombre et le poids est élevé en vue de les acheminer sur les postes de travail. Ces convoyeurs peuvent être aériens ou positionnés au sol selon les opérations à effectuer sur les produits.

Le brevet européen EP-A-0.567.295 décrit un convoyeur destiné à acheminer des pièces à différents postes de travail, ledit convoyeur comprenant : un rail porteur et directeur positionné sur le site de travail de façon à acheminer les produits à convoyer aux postes de travail, un organe de traction porté par le rail, une multitude de trolleys mobiles sur le rail et sur lesquels sont accrochées les pièces, chaque trolley comprenant deux galets de roulement sur le rail et deux bras portant la charge à convoyer. Les galets du trolley sont composés d'une âme centrale et d'un bandeau extérieur réalisés tous deux en matériau composite et solidarisés par des moyens de liaison encastrement qui immobilisent le bandeau extérieur vis-à-vis de l'âme centrale.

Les convoyeurs se composent d'un rail, d'une chaîne de traction et de trolleys. Le rail a souvent une section en forme de I et constitue le chemin à suivre par les pièces à convoyer. Un groupe moteur tracte la chaîne qui est reliée aux trolleys, eux-mêmes transportant les produits. Le groupe moteur doit être capable de tracter une charge totale dont le poids varie par exemple de cent à trois mille kilogrammes.

Le trolley est quant à lui composé de deux galets et de deux bras, et d'une cale dont l'épaisseur permet de maintenir l'extrémité des deux bras en position à l'intérieur d'un maillon de la chaîne. Les bras des trolleys supportent la charge qui est suspendue au rail dans le cas d'un convoyeur aérien ou qui repose sur le rail dans le cas d'un convoyeur au sol.

Chaque bras du trolley dispose à son extrémité d'un galet monté en liaison pivot au moyen d'un roulement à bille, lesdits galets étant positionnés en appui sur le rail et de chaque côté du rail.

L'ensemble des éléments constituant le convoyeur, c'est-à-dire rail, trolley et chaîne, sont réalisés en acier, ce qui crée un bruit important sur le site de travail. En effet, les différents éléments du convoyeur sont sans cesse soumis à des efforts de traction ou de compression, à des chocs et du frottement entre les éléments en acier ce qui amplifie les décibels qui sont déjà importantes étant donné le bruit des machines de production et des moteurs de traction de la chaîne du convoyeur.

Ces bruits dus aux chocs et aux frottements des trolleys avec le rail et la chaîne sont fortement amplifiés par le fait que le rail a une longueur très importante atteignant en moyenne cent à mille mètres par convoyeur et que le nombre de trolleys positionnés sur le rail est également important puisque les trolleys sont espacés en moyenne de trois cents à mille millimètres.

Il est donc fréquent avec ce niveau de bruit de trouver des employés qui se plaignent de trouble auditif et de maux de tête.

Au cours de l'acheminement des produits, ceux-ci dirigés par le rail suivent un chemin variable qui est une succession de virages, de lignes droites, de pentes et de montées et subissent également une succession d'accélération et de décélération selon que les pièces se situent dans une zone de travail ou non. Pour cela, les galets en contact sur le rail subissent des efforts de traction et de compression qui engendrent du frottement et des chocs important des galets sur le rail, tous deux en acier et donc une usure importante des deux éléments.

Il est donc obligatoire de graisser les galets en contact sur le rail pour réduire cette usure et les arrêts de la chaîne de fabrication pour réparer certains éléments du convoyeur. Ce graissage s'effectue de plus en quantité importante étant donnés les kilomètres de convoi existants sur le site de travail.

Cependant, malgré ce graissage, le rail subit tout de même une usure importante qui peut atteindre environ un centimètre au bout de quelques années, ce qui demande de changer les rails dans les courbes verticales et horizontales avec une fréquence de quatre à cinq ans en général.

Lors du fonctionnement du convoyeur, les bras des trolleys sont également soumis à des efforts de traction et de compression vis-à-vis du travail de la chaîne sur l'extrémité des bras, ce qui engendre des chocs des galets sur le rail et dans la chaîne et augmente donc encore le bruit et l'usure des éléments du convoyeur.

De plus, la chaîne, sous tension et en mouvement, subit des frottements importants au niveau des axes et des maillons qui s'usent alors très rapidement, ce qui oblige à changer fréquemment et à graisser abondamment la chaîne. Ainsi, il es utilisé en moyenne deux cents litres d'huile de graissage par mois pour environ cinq ou six convoyeurs de plusieurs kilomètres.

Certains convoyeurs sur le site de travail se situent dans un milieu humide qui génèrent avec le temps de la corrosion sur l'ensemble des éléments qui sont tous en acier. Ces éléments subissent des chocs et de l'usure qui entraînent la chute de la corrosion sur le site de travail et plus précisément sur les produits à convoyer. C'est pourquoi, par exemple, on retrouve fréquemment des points de corrosion sur les carrosseries de voiture lorsque celles-ci sont peintes.

De plus, cette corrosion et le graissage abondant du convoyeur se retrouvent sur le site, les produits, ce qui rend les conditions et le cadre de travail très désagréables.

La présente invention vise à remédier à tous ces inconvénients et l'un des buts principal est de réduire le bruit, le graissage et l'usure du convoyeur en utilisant un trolley réalisé en matériau composite et dont la conception permet d'encaisser les efforts de traction et de compression et de limiter les chocs au niveau des galets sur le rail et au niveau de la chaîne.

Ainsi, la présente invention a pour avantage de réduire les chocs et les frottements des galets sur le rail du convoyeur en absorbant les efforts exercés sur le galet lors des variations de parcours et lors des variations de vitesse.

De cette façon, le rail et les galets ne subissent quasiment pas d'usure et il est possible de supprimer complètement le graissage des galets au niveau du rail.

Un autre avantage de la présente invention est de pouvoir augmenter et faire varier la vitesse et le convoyage des pièces dans les "zones mortes", c'est-à-dire où il n'y a aucun travail à effectuer sur les produits, grâce à l'absorption des efforts sur le galet. En effet, les galets en contact sur le rail ont pour avantage de se déformer facilement lors de la variation de vitesse et de direction, et ainsi d'encaisser les efforts et chocs ce qui permet d'augmenter la vitesse de déplacement des trolleys dans les zones où il n'y a aucun travail à effectuer sur les pièces.

La présente invention a également pour but d'utiliser des bras en matériau composite avec une structure particulière permettant d'encaisser les efforts de traction et de compression et ainsi d'amortir les chocs des galets sur le rail et les chocs sur la chaîne de traction. Cela a également pour effet de réduire le bruit et l'usure des éléments du convoyeur.

La réduction de l'ensemble des chocs et l'utilisation de matériau composite pour le galet et le bras suppriment fortement, quasiment le bruit lors du fonctionnement. Ainsi on diminue le bruit de dix décibels par rapport aux convoyeurs existants où les éléments sont en acier.

Un autre avantage de la présente invention est de réduire le poids du convoyeur en utilisant les trolleys en matériau composite au lieu de l'acier. Cette réduction du poids a pour effet de réduire les efforts de traction sur la chaîne ce qui prolonge sa durée de vie et permet également d'utiliser des groupes moteurs plus petits puisque la charge à tracter est plus faible.

Un autre avantage de la présente invention, combinée avec la réduction des efforts de traction et des chocs de la chaîne, est de réduire l'usure de la chaîne et plus particulièrement des axes et des maillons de la chaîne en augmentant les propriétés mécanique des axes.

Ainsi, on augmente la durée de vie de la chaîne et il est possible de diminuer la quantité d'huile de graissage et la fréquence de graissage de celle-ci, ce qui permet de mieux maîtriser les opérations de maintenance de l'entreprise.

D'autres buts et avantages de la présente invention apparaîtront au cours de la description suivante qui n'est cependant donnée qu'à titre indicatif et qui n'a pas pour but de la limiter.

La présente invention concerne un convoyeur destiné à acheminer des pièces à différents postes de travail, utilisable en particulier dans l'industrie automobile pour convoyer des carrosseries, des moteurs, des boîtes de vitesse, ledit convoyeur comprenant :
- un rail porteur et directeur positionné sur le site de travail de façon à acheminer les produits à convoyer aux postes de travail,
- un organe de traction, porté par le rail, ledit organe étant tracté au moyen d'un groupe moteur,
- une multitude de trolleys mobiles sur le rail et sur lesquels sont accrochées les pièces, chaque trolley comprenant deux galets de roulement sur le rail et deux bras portant la charge à convoyer, lesdits galets du trolley étant composés d'une âme centrale et d'un bandeau extérieur, réalisés tous deux en matériau composite et solidarisés par des moyens de liaison encastrement qui immobilisent le bandeau extérieur vis-à-vis de l'âme centrale afin d'absorber les efforts de traction ou de compression et les chocs, et ainsi réduire le bruit, l'usure et le graissage des éléments du convoyeur,
ledit convoyeur étant caractérisé par le fait que l'organe de traction, dans le cas de petites charges, est un câble de traction solidaire de chaque trolley du convoyeur au moyen d'un dispositif de grippage sur les deux bras desdits trolleys pour supprimer l'usure et le graissage de l'organe de traction.

L'invention sera mieux comprise à la lecture de la description qui s'appuie sur les figures suivantes :
- la figure 1 illustre une vue d'ensemble du convoyeur se trouvant sur le site de travail,
- la figure 2 illustre les différents éléments constituant le convoyeur,
- la figure 3 présente une vue de côté de la figure 1 mettant en évidence les pattes de renforts,
- les figures 4 et 5 illustrent les moyens de liaison entre les éléments constituant les galets,
- les figures 6 à 8 illustrent les éléments du convoyeur munis d'un dispositif de grippage pour utiliser un câble de traction.

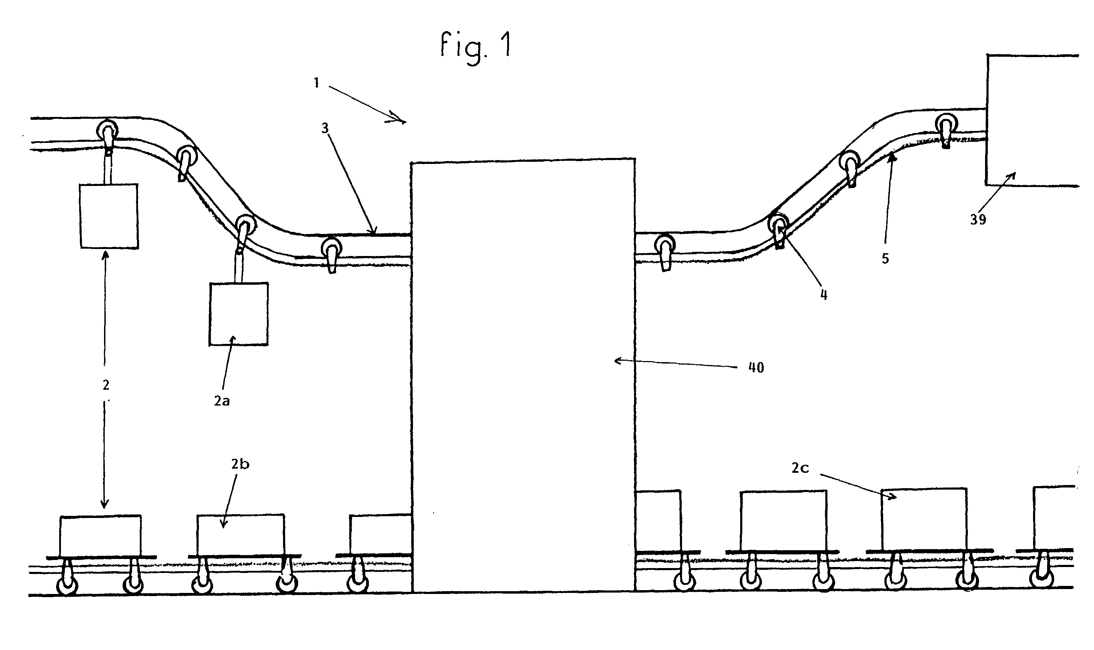

La présente invention concerne un convoyeur (1) utilisable en particulier dans l'industrie automobile pour transporter les produits (2) de type carrosserie, moteur ou boîte de vitesses et les acheminer aux postes de travail comme le schématise la figure 1 où par exemple deux produits de types (2a) et (2b) sont acheminés à un poste de travail (40) en vue d'obtenir, après transformation, un produit de type (2c). Elle trouvera également son application dans tout type d'industrie où il est nécessaire de convoyer des pièces en grande quantité et dont le poids sera généralement important.

Les convoyeurs (1) peuvent être aériens, c'est-à-dire suspendus en hauteur sur la structure des bâtiments, au sol, ou dans une fosse de façon à ce que les produits (2) soient positionnés à la hauteur du sol.

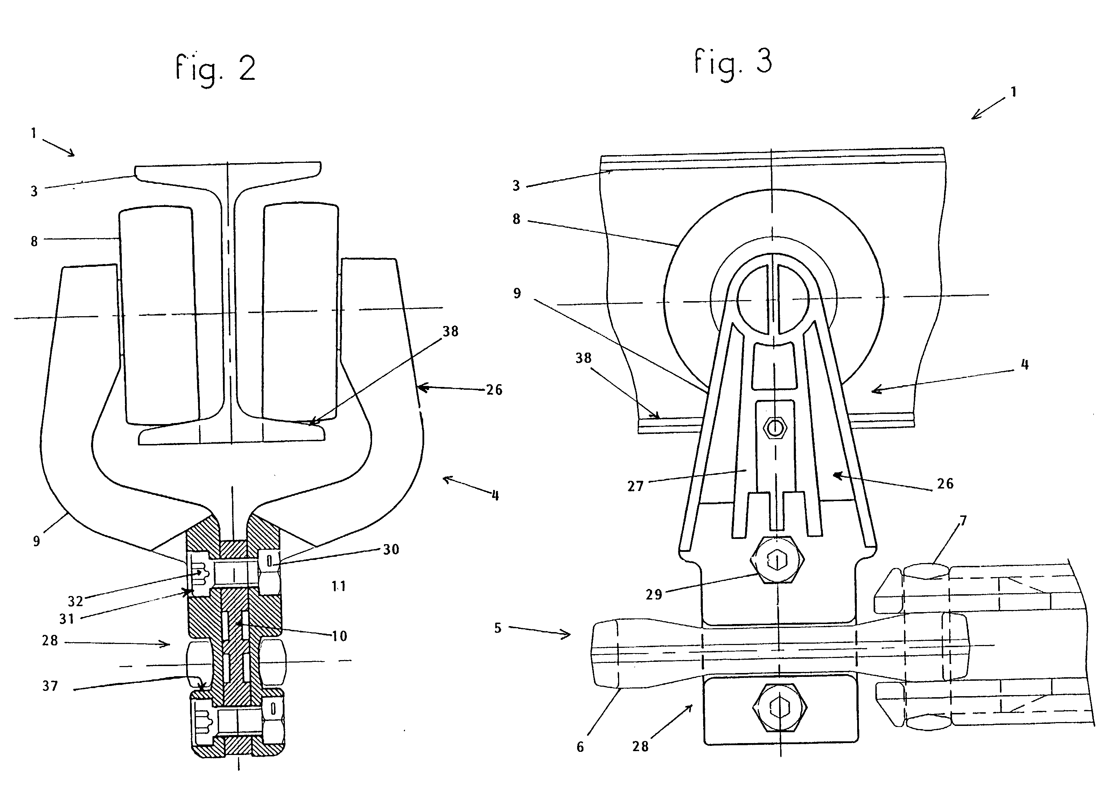

Les figures 2 et 3 présentent les éléments constituant le convoyeur (1). Celui-ci est composé d'un rail (3), d'un organe de traction (5) et des trolleys (4). Dans un premier cas, lorsque la charge totale à tracter a par exemple un poids supérieure à cent kilogrammes, l'organe de traction (5) utilisé sera une chaîne de traction.

La chaîne (5) est tractée au moyen d'un groupe moteur, schématisé en figure 1 et référencé (39), ce qui permet de déplacer les produits (2) le long du rail et de les amener sur les postes de travail.

Le rail (3) est réalisé, dans un mode préférentiel, en acier et il a une section en forme de I dont la taille dépend de celle des trolleys (4) en contact sur celui-ci. La taille des trolleys dépendant elle-même du poids des pièces à transporter.

Le rail peut atteindre en moyenne des longueurs de plusieurs kilomètres et sa position sur le site de travail dépend de celle de chacun des postes de travail où il est nécessaire d'acheminer les produits en vue d'y effectuer des opérations par exemple de type usinage, montage ou peinture.

La chaîne (5) de traction est également de préférence en acier. Elle se compose de maillons (6) reliés entre eux par des d'axes (7). La longueur de la chaîne dépend de la longueur du convoyeur. Celle-ci est reliée à un groupe moteur (39), de puissance élevée, qui la tire et entraîne automatiquement le déplacement des trolleys (4) et donc des produits (2). Elle est graissée au moyen d'un dispositif de graissage permettant de limiter l'usure des axes (7) et des maillons (6) de la chaîne.

Les trolleys (4) sont constitués de deux galets (8) de roulement, de deux bras (9) et d'une cale (10). Les deux bras (9) sont positionnés dans un maillon (6) de la chaîne (5) et sont maintenus écartés à l'intérieur de celui-ci au moyen de la cale (10) dont l'épaisseur dépend de la largeur du maillon et de l'épaisseur des bras. Les deux bras (9) et la cale (10) sont fixés ensemble par vissage (11). Ainsi, le groupe moteur en tractant la chaîne (5) entraîne automatiquement le déplacement des trolleys (4) sur le rail (3).

La cale (10) est réalisée dans un mode préférentiel au moyen d'un matériau composite qui contribue à réduire le poids des trolleys et le bruit de résonance.

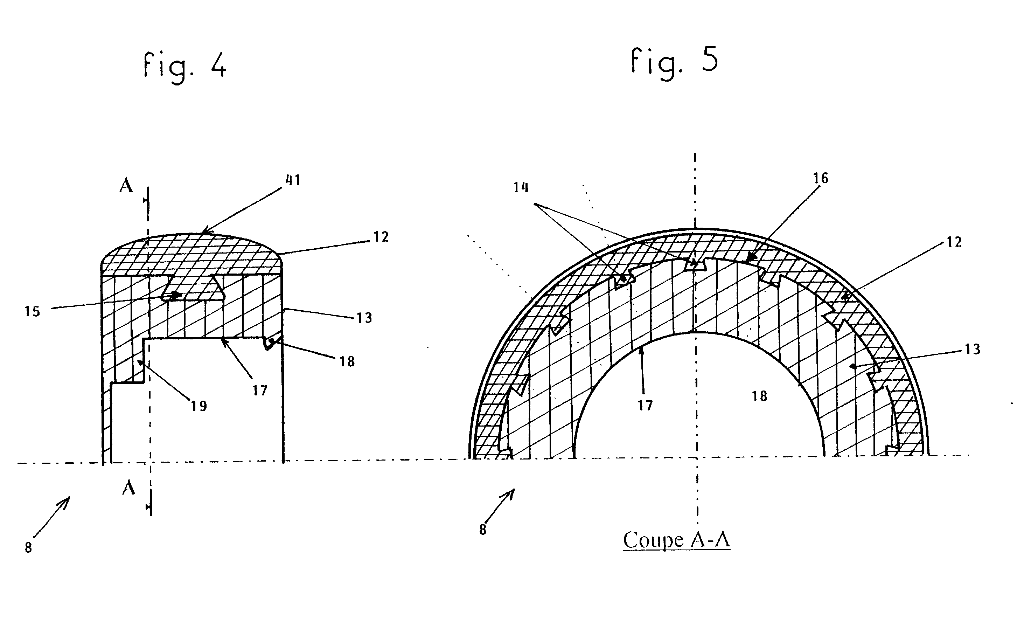

Les figures 4 et 5 présentent la structure du galet (8) qui se compose de deux parties (12, 13) réalisées toutes deux en matériau composite et solidarisées par des moyens (14, 15) de liaison encastrement qui immobilisent complètement les deux parties du galet entre elles. La première partie est appelée bandeau extérieur (12) et la seconde âme centrale (13) du galet. En utilisant des matériaux composites pour la conception du galet (8), on réduit considérablement le bruit dû au contact des galets sur le rail.

Le matériau composite utilisé pour le bandeau extérieur (12) est un matériau beaucoup plus tendre que celui utilisé pour l'âme centrale (13). De cette façon, le bandeau extérieur se déforme facilement, ce qui permet d'absorber des efforts de traction et de compression et les chocs des galets sur le rail lors des variations de vitesse du groupe moteur (39), selon que l'on se trouve dans une zone de travail ou non, et lors de variation de direction du rail (3), selon la position du rail sur le site de travail.

Cela permet également de limiter les frottements des galets sur le rail grâce à une meilleure adhérence entre la surface externe (41) du bandeau extérieur (12) et la face (38) de contact sur le rail. Ainsi, on réduit l'usure des galets et du rail en utilisant les caractéristiques du matériau composite utilisé pour le bandeau extérieur (12), ce qui permet de supprimer le graissage du rail.

Le matériau composite utilisé pour le bandeau extérieur (12) sera à titre d'exemple du polyuréthane injecté thermoplastique qui dispose de cette caractéristique recherchée pour le bandeau extérieur. D'autres matériaux remplissant cette fonction pourraient donner satisfaction. Le bandeau extérieur aura par exemple une épaisseur de cinq à huit millimètres pour un diamètre du galet (8) de quatre vingt millimètres.

Le matériau composite utilisé pour l'âme centrale (13) doit permettre de conserver une structure rigide au centre du galet (5). L'âme centrale (13) sert ainsi de support pour la liaison entre le galet et le bras (9) et pour la liaison encastrement (14, 15) entre le bandeau extérieur et l'âme centrale, et évite que le galet ne se déforme trop pour conserver les liaisons entre les différents éléments.

Les moyens (14, 15) de liaison encastrement réalisés entre le bandeau extérieur (12) et l'âme centrale (13) permettent d'immobiliser dans toutes les directions le bandeau extérieur (12) par rapport à l'âme centrale (13). Ainsi le bandeau extérieur se déforme dans tous les sens lors des efforts et des chocs sur le rail sans pouvoir se détacher de l'âme centrale, ce qui permet de conserver l'assemblage mécanique de ces deux éléments et donc l'intégralité du galet.

Les moyens de liaison encastrement entre le bandeau extérieur (12) et l'âme centrale (13) sont constitués par la combinaison de queues d'aronde (14) positionnées axialement sur la périphérie (16) de contact entre les deux éléments (12, 13) et d'une queue d'aronde (15) centrale positionnée radialement sur toute la périphérie (16) de contact entre les deux éléments qui constituent le galet.

Le nombre de queues d'aronde (14) positionnées axialement est aléatoire et dépend des efforts et des chocs que devra encaisser le bandeau extérieur du galet ainsi que de la taille du galet. Par exemple et dans un mode préférentiel, celui-ci est composé de seize queues d'aronde positionnées axialement autour du galet pour un galet de diamètre quatre vingt millimètres.

Ces queues d'aronde (14) permettent de supprimer la rotation du bandeau extérieur (12) autour de l'âme centrale (13) ainsi que la translation radiale du bandeau extérieur par rapport à l'âme centrale. La queue d'aronde centrale (15) permet quant à elle de supprimer la translation axiale du bandeau extérieur (12) par rapport à l'âme centrale. De cette façon, on immobilise dans toutes les directions le bandeau extérieur par rapport à l'âme centrale.

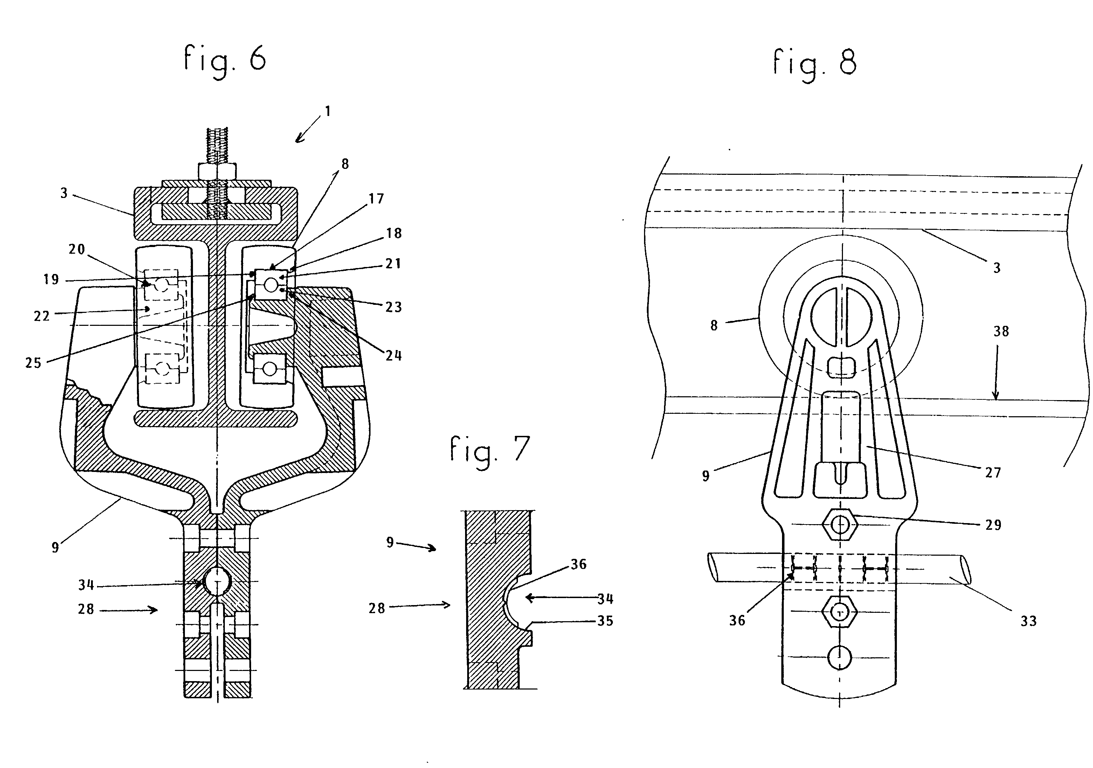

Le galet (8) est monté sur le bras (9) en liaison pivot. Pour cela, l'âme centrale (13) du galet dispose, comme le montre la figure 6, d'un alésage intérieur (17) muni d'un épaulement (19) et d'un rebord (18). Le rebord (18) permet, en combinaison avec la rigidité du matériau composite utilisé pour l'âme centrale, de monter serré par clipsage la cage extérieure (21) d'un roulement à billes (20) et de l'immobiliser complètement.

De la même façon, le bras (9) dispose d'une partie cylindrique (22) munie d'un épaulement (24) et d'un rebord (25) permettant de clipser la cage intérieure (23) d'un roulement à billes (20) et de l'immobiliser complètement.

De cette façon, le roulement à billes (20) est monté par clipsage sur le galet (8) et sur le bras (9), ce qui immobilise en translation le galet par rapport au bras et réalise ainsi une liaison pivot entre les deux éléments.

Le roulement à billes sera monté de préférence à la presse sur l'âme centrale (13) du galet (8) et sur la partie cylindrique (22) du bras (9) étant donné que les éléments sont montés serrés.

Les bras (9) des trolleys sont également réalisés en matériau composite. Ainsi, les trolleys sont complètement réalisés en matériau composite, ce qui supprime complètement les contacts entre les éléments en acier, c'est-à-dire entre le galet (8) et le rail (3), et entre la chaîne (5) et les bras (9) des trolleys (4). De cette façon, on réduit le bruit dû aux chocs des éléments lors des variations de direction ou des variations de vitesse, ce bruit étant très important étant donnée la quantité importante de trolleys (4) se trouvant sur le convoyeur. Ainsi, on peut réduire de plus de dix décibels le bruit par rapport aux convoyeurs antérieurs.

L'utilisation du matériau composite pour la conception du bras (9) permet d'obtenir une bonne élasticité de celui-ci qui s'allonge et se comprime facilement. Celui-ci devant supporter le poids des pièces à transporter et également celui de la chaîne, il est donc nécessaire de rigidifier les bras pour éviter qu'ils ne se déforment trop fortement. Pour cela, les bras disposent sur leur face latérale (26) de pattes de renfort (27) permettant de rigidifier la structure du bras. Les pattes de renfort (27) sont positionnées dans le sens des déformations du bras (9), c'est à dire principalement dans le sens longitudinal du bras.

Cette conception du bras permet ainsi d'amortir les efforts de traction et de compression sur les galets et sur le bras lui-même, et les chocs des galets sur le rail et de la chaîne de traction sur l'extrémité (28) du bras (9). L'effet amortisseur du bras (9) étant obtenu par la combinaison de l'élasticité du matériau et des raidisseurs que constituent les pattes de renfort (27).

Ainsi les bras (9) des trolleys réduisent également l'usure, le bruit et le graissage des éléments du convoyeur.

Afin de faciliter le montage des trolleys (4) sur le rail (2), les bras (9) du trolley disposent sur leur extrémité (28) d'empreintes hexagonales (29) dans lesquelles viennent se loger un écrou sur le premier bras du trolley, et une vis sur l'autre bras. La vis aura de préférence une tête a six pans creux de façon à pouvoir placer la tête (32) de la vis (31) dans l'empreinte hexagonale (29) sans bloquer celle-ci en rotation.

L'empreinte hexagonale est réalisée dans une dimension légèrement supérieure à celle de l'écrou, ainsi l'écrou est autobloqué dans l'empreinte lors du serrage de la vis, ce qui supprime l'utilisation d'une clé supplémentaire pour maintenir l'écrou lors du serrage de la vis pour la fixation des deux bras (9) et de la cale (10) des trolleys (4).

En utilisant des trolleys de conception en matériau composite, hormis les systèmes de vissage, on supprime un poids très important sur le convoyeur. En effet, la densité du matériau composite utilisé pour les trolleys est environ de 1.1 alors que celle de l'acier est de 7.8, et étant donné le nombre de trolleys utilisés sur le convoyeur de très grande distance, cela supprime une charge très importante à tracter par la chaîne et le groupe moteur.

Ainsi, on peut utiliser des groupes moteurs de puissance réduite et donc moins cher. De même, la chaîne (5) de traction est soumise à des efforts moins importants qui réduisent les frottements et les chocs dans le maillon interne de la chaîne, ce qui contribue à diminuer l'usure de celle-ci.

Les axes (7) de la chaîne (5) de traction présentent une couche de revêtement de bisulfure de molybdène MoS2. Cette couche de bisulfure de molybdène a pour effet d'augmenter la résistance des axes et de réduire le coefficient de frottement des axes sur les maillons (6) de la chaîne (5). Ainsi, on augmente la durée de vie de la chaîne de traction tout en réduisant le graissage de celle-ci.

En effet, la quantité d'huile utilisée pour le graissage de la chaîne, grâce à tous les apports de la présente invention, permet d'utiliser uniquement quinze à vingt pour cent d'huile de graissage par rapport à la quantité utilisée précédemment, et d'effectuer ce graissage avec une fréquence de deux mois. Ainsi, les opérateurs gèrent plus facilement les opérations de maintenance du convoyeur.

Dans le cas où les charges à tracter sont moins importantes en nombre et en poids, par exemple une charge totale inférieure à cent kilogrammes, l'organe de traction utilisé pour tirer les trolleys et les pièces est un câble flexible réalisé dans un mode préférentiel en kévlar et renforcé à son centre par de l'acier. L'utilisation d'un câble (33) revêtu par un matériau composite supprime ainsi complètement le graissage et l'usure de la chaîne de traction, et réduit également le bruit du convoyeur.

Dans ce cas, les trolleys sont fixés sur le câble de traction au moyen d'un dispositif de grippage (34) réalisé sur l'extrémité (28) du bras (9).

Les moyens de grippage (34) se composent d'une rainure en forme cylindrique (35) et de petits rebords tranchants (36). La rainure en forme cylindrique (35) est réalisée avec un rayon identique à celui du câble de traction (33) de façon à bien prendre forme sur celui-ci.

Les figures 6 à 8 montrent que ces rainures (35) disposent de petits rebords tranchants (36) qui, lors de l'assemblage et du serrage des deux bras du trolley, s'imprègnent dans la matière du câble et immobilisent complètement le trolley sur celui-ci.

Ces petits rebords (36) ont dans un mode préférentiel la forme d'un H de façon à ce que, combinés avec le serrage, les deux bras soient immobilisés en rotation et en translation par rapport au câble.

Dans le cas de l'utilisation de câble de traction (33), les vis de serrage sur les bras du trolley seront au minimum de deux, et positionnées obligatoirement chacun d'un côté de la rainure (35) de façon à bien répartir les efforts de serrage lors du vissage et ainsi imprégner les rebords tranchants dans le câble et immobiliser les trolleys avec le câble.

Par contre, dans le cas d'une chaîne de traction, l'emplacement des vis de serrage sur l'extrémité (28) du bras (9) pourra être varié puisque, une fois le vissage effectué, les bras (9) sont immobilisés en position dans le maillon (6) de la chaîne grâce à la rainure rectangulaire (37) qui vient se loger dans le maillon, et grâce à la cale (10) qui maintient écartés les deux bras et ainsi maintient les rainures rectangulaires (37) en position sur le maillon (6).

La présente invention réduit donc fortement le bruit sur le site de travail en utilisant un trolley en matériau composite qui supprime les contacts entre les éléments en acier du convoyeur et réduit les problèmes d'usure et de corrosion.

Elle permet de plus de supprimer le graissage sur le rail et de réduire considérablement le graissage de la chaîne de traction, voir même supprimer le graissage lors de l'utilisation d'un câble (33) de traction revêtu par un matériau composite au lieu d'une chaîne (5).

La suppression du graissage et de l'usure des éléments du convoyeur permet de plus de mieux gérer les opérations de maintenance et ainsi diminuer leur coût. La présente invention permet également d'améliorer la qualité et les conditions de travail sur le site en éliminant les problèmes de corrosion, supprimant la chute des huiles de graissage sur les produits et sur les employés, et en réduisant fortement le niveau de bruit sur le site.

## Revendications

1. Convoyeur (1) destiné à acheminer des pièces à différents postes de travail, utilisable en particulier dans l'industrie automobile pour convoyer des carrosseries, des moteurs, des boîtes de vitesse, ledit convoyeur comprenant :
- un rail (3) porteur et directeur positionné sur le site de travail de façon à acheminer les produits (2) à convoyer aux postes de travail (40),
- un organe de traction (5), porté par le rail (3), ledit organe étant tracté au moyen d'un groupe moteur (39),
- une multitude de trolleys (4) mobiles sur le rail et sur lesquels sont accrochées les pièces (2), chaque trolley comprenant deux galets (8) de roulement sur le rail et deux bras (9) portant la charge à convoyer, lesdits galets (8) du trolley (4) étant composés d'une âme centrale (13) et d'un bandeau extérieur (12), réalisés tous deux en matériau composite et solidarisés par des moyens (14, 15) de liaison encastrement qui immobilisent le bandeau extérieur vis-à-vis de l'âme centrale,
**caractérisé par le fait que** l'organe (5) de traction, dans le cas de petites charges, est un câble (33) de traction solidaire de chaque trolley (4) du convoyeur au moyen d'un dispositif de grippage (34) sur les deux bras (9) desdits trolleys (4).

2. Convoyeur (1) destiné à acheminer des pièces (2) à différents postes de travail (40), utilisable en particulier dans l'industrie automobile, selon la revendication 1, **caractérisé par le fait que** le dispositif de grippage (34) est réalisé par une rainure (35) de forme cylindrique munie de petits rebords (36) tranchants qui s'imprègne dans le câble (33) de traction.

## Patentansprüche

1. Förderer (1) zum Fördern von Bauteilen zu verschiedenen Arbeitsständen, insbesondere für Einsatz in der Automobilindustrie zum Fördern von Karosserien, Motoren, Getrieben, wobei der genannte Förderer folgendes umfaßt :
- eine Trag- und Führungsschiene (3), die am Arbeitsort so positioniert ist, daß die zu fördernden Produkte (2) zu den Arbeitsständen (40) gefördert werden,
- ein Ziehorgan (5), das von der Schiene getragen wird (3), wobei das genannte Organ mittels eines Motoraggregats (39) gezogen wird,
- eine Vielzahl von auf der Schiene beweglichen Trolleys (4), an denen die Bauteile (2) aufgehangen werden, wobei jeder Trolley zwei Laufräder (8) zum Rollen auf der Schiene und zwei Arme (9), welche die zu fördernde Last tragen, umfaßt, wobei die genannten Laufräder (8) des Trolleys (4) aus einem zentralen Kern (13) und einem äußeren Band (12) bestehen, die beide aus einem Verbundmaterial hergestellt und über Verbindungs- und Einbaumittel (14, 15) fest mit einander verbunden sind, welche das äußere Band bezüglich des zentralen Kerns unbeweglich machen,
**dadurch gekennzeichnet, daß** das Ziehorgan (5) im Falle von kleinen Lasten ein Zugkabel (33) ist, das fest mit jedem Trolley (4) des Förderers verbunden ist, mittels einer Greifvorrichtung (34) an beiden Armen (9) der genannten Trolleys (4).

2. Förderer (1) zum Fördern von Bauteilen (2) zu verschiedenen Arbeitsständen (40), insbesondere für Einsatz in der Automobilindustrie, gemäß Anspruch 1, **dadurch gekennzeichnet, daß** die Greifvorrichtung (34) aus einer zylinderförmigen Nut (35) besteht, die mit kleinen hochstehenden, scharfen Rändern (36) versehen ist, die in das Zugkabel (33) hineindringen.

## Claims

1. Conveyor (1) for conveying parts to various working stations, usable in particular in the car industry to convoy bodies, engines, gear boxes, said conveyor comprising :
- a bearing and guiding rail (3) positioned on the working site so as to convey the products (2) to be conveyed to the working stations (40),
- a traction organ (5), carried by the rail (3), said organ being drawn by means of a motor aggregate (39),
- a multiplicity of trolleys (4) movable on the rail and on which the parts (2) are hung, each trolley comprising two rail-wheels (8) for rolling on the rail and two arms (9) bearing the load to be conveyed, said rail-wheels (8) of the trolley (4) being comprised of a central core (13) and an outer strip (12), both made out of a composite material and made integral by connecting-embedding means (14, 15) which immobilise the outer strip with respect to the central core,
**characterised in that** the traction organ (5) is, in the case of small loads, a pulling cable (33) integral with each trolley (4) of the conveyor by means of a gripping device (34) on both arms (9) of said trolleys (4).

2. Conveyor (1) for conveying parts (2) to various working stations (40), usable in particular in the car industry, according to claim 1, **characterised in that** the gripping device (34) is comprised of a cylindrically shaped groove (35) provided with small sharp rims (36) which penetrate into the pulling cable (33).
